(19) Europäisches Patentamt / European Patent Office / Office européen des brevets

(11) EP 2 444 379 A1

(12) EUROPEAN PATENT APPLICATION
published in accordance with Art. 153(4) EPC

(43) Date of publication:
25.04.2012 Bulletin 2012/17

(51) Int Cl.:
C03B 18/06 (2006.01)      C03B 18/20 (2006.01)

(21) Application number: 10789563.3

(22) Date of filing: 17.06.2010

(86) International application number:
PCT/JP2010/060311

(87) International publication number:
WO 2010/147189 (23.12.2010 Gazette 2010/51)

(84) Designated Contracting States:
AL AT BE BG CH CY CZ DE DK EE ES FI FR GB
GR HR HU IE IS IT LI LT LU LV MC MK MT NL NO
PL PT RO SE SI SK SM TR

(30) Priority: 19.06.2009 JP 2009146531

(71) Applicant: Asahi Glass Company, Limited
Tokyo 100-8405 (JP)

(72) Inventors:
• TAKIGUCHI, Tetsushi
  Tokyo 100-8405 (JP)
• TOMITA, Naruaki
  Tokyo 100-8405 (JP)

(74) Representative: Schiuma, Daniele Wolfgang
Müller-Boré & Partner
Grafinger Strasse 2
81671 München (DE)

(54) TOP ROLLER, FLOAT GLASS PRODUCTION DEVICE, AND FLOAT GLASS PRODUCTION METHOD

(57) A top roller, which is difficult for a flow path for cooling water to be narrowed or clogged therein, and which is capable of properly working for a long period of time, is provided.

A top roller comprising a rotatable leading edge portion, which is adapted to be used for controlling the shrinkage of a molten glass ribbon in a float bath and to be brought into contact with the molten glass ribbon, the leading edge portion having a hollow structure including a leading edge space therein; wherein cooling water having a hardness of at most 100 (mg/L) passes through the leading edge space.

Fig.4

EP 2 444 379 A1

**Description**

TECHNICAL FIELD

The present invention is a top roller usable for producing glass by a float process, a float glass manufacturing apparatus including such top rollers, and a float glass manufacturing process employing such top rollers.

BACKGROUND ART

As one of the processes for manufacturing sheet glass, the float process has been known. In the float process, sheet glass is manufactured through the following steps, broadly speaking:

(1) Molten glass is introduced onto the surface of molten tin contained in a float bath.
(2) The Molten glass is continuously conveyed on the molten tin from an upstream side toward a downstream side so as to form a glass ribbon.
(3) Both lateral edge portions of the glass ribbon are lightly held down to control the shrinkage of the glass ribbon in a width direction.
(4) The glass ribbon is drawn out of the float bath by roller conveyance, being annealed, to produce sheet glass.

In step (3), devices called top rollers are employed. The top rollers are plural edge rollers, which are disposed on both lateral edge portions of the glass ribbon in an upstream area of the float bath (an area close to a side of the float bath where the molten glass is introduced) in order not only to control the width and the thickness of the glass ribbon of the molten glass introduced into the float bath but also to advance the glass ribbon. The top rollers have a rotary member disposed on a leading edge. By bringing the rotary members into contact with the surface of the glass ribbon at both lateral edge portions to hold down the glass ribbon and rotating the rotary members, it is possible to control the shrinkage of the glass ribbon and to convey the glass ribbon so as to have predetermined width and thickness. In Specification, the shrinkage of the glass ribbon means the shrinkage of the glass ribbon in the width direction.
The leading edges of the top rollers are likely to be extremely heated in use in a non-cooled state because of being brought into direct contact with a glass ribbon at a high temperature. For this reason, the leading edges of the top rollers are normally cooled by passing cooling water through flow paths formed in the top rollers (see Patent Document 1 for example).

PRIOR ART DOCUMENT(S)

Patent Document 1: JP-A-2008-189516

DISCLOSURE OF INVENTION

TECHNICAL PROBLEM

The cooling water for cooling the leading edge portions of the top rollers is normally industrial water.
However, when industrial water is used as the cooling water in the top rollers, impure components contained in such industrial water trend to gradually precipitate and deposit on walls forming the flow paths with the lapse of time. As a result, after the top rollers have been employed for a long period of time, the flow paths for the cooling water are narrowed or clogged, causing a problem that the leading edge portion of a top roller is prevented from being sufficiently cooled
If such clogging of the cooling water occurs, the temperature of the leading edge portion of that top roller increases, possibly leading to a case where the leading edge portion of that top roller is bonded to molten glass or wrapped with a glass ribbon to prevent the rotary members in a toothed form from sufficiently rotating. In such a case, that top roller is possibly prevented from properly working, and further, trouble possibly occur in the conveyance of the glass ribbon.
The production of thin sheet glass (having, e.g. a thickness of 0.3 mm to 1 mm) has expanded for display devices, such as liquid crystal panels, particularly for recent years. Such sheet glass is mainly made of alkali-free glass. Such alkali-free glass has a high melting point, which is at least 100°C higher than normal soda-lime glass.
In such sheet glass, the glass ribbon is required to be thinner than before in the manufacture of glass, and the number of the top rollers disposed per manufacturing facility is required to be increased than before. In order to increase the number of the top rollers disposed in a space having the same size, the size of the rotary members disposed on the leading edge portions of the top rollers is required to be made smaller. The flow paths for cooling water trend to be more narrowed for recent years due to a decrease in the size of the rotary members.

The leading edge portions of the top rollers are subjected to a higher temperature due to an increase in the temperature of a glass ribbon. It is highly likely that the amount of a deposit adhering to the flow paths for cooling water as described above increases as the temperature of the top rollers increases.

It is highly likely that the above-mentioned problem of "logging" is caused under such recent circumstances even if the top rollers are employed only for a short period of time.

The present invention is proposed, taking into account this problem. It is an object to provide a top roller, which is difficult for a flow path for cooling water to be narrowed or clogged therein, and which is capable of properly working for a long period of time.

SOLUTION TO PROBLEM

The present invention provides a top roller, which includes a rotatable leading edge portion, which is adapted to be used for controlling the shrinkage of a molten glass ribbon in a float bath and to be brought into contact with the molten glass ribbon, the leading edge portion having a hollow structure including a leading edge space therein; wherein cooling water having a hardness of at most 100 (mg/L) passes through the leading edge space.

The present invention also provide the above-mentioned top roller, wherein the leading edge portion has such a hollow structure including such a leading edge space therein, and there is provided a flow path for supplying the cooling water to the leading edge space; and wherein the cooling water having a hardness of at most 100 (mg/L) passes through the leading edge space and the flow path.

The present invention also provides a float glass manufacturing apparatus, which includes a float bath having a molten glass ribbon conveyed on an upper surface, and top rollers employed for controlling the shrinkage of the molten glass ribbon; wherein each of the top rollers is the top roller having the features described above.

The present invention also provides a process for manufacturing float glass, which includes:

a step for introducing molten glass into a float bath;
a step for conveying the molten glass from an upstream side to a downstream side of the float bath to form a glass ribbon and
a step for controlling the shrinkage of the glass ribbon by rotating top rollers while leading edge portions of the top rollers are pressed against top surfaces of both lateral portions of the glass ribbon in an area of the glass ribbon in an advancing direction of the glass ribbon;
wherein the leading edge portion of each of the top rollers is a rotatable leading edge portion;
the leading edge portion has a hollow structure including a leading edge space therein; and
cooling water having a hardness of at most 100 (mg/L) passes through the leading edge space.

The present invention also provides the above-mentioned process for manufacturing float glass, wherein the leading edge portion of each of the top rollers has such a hollow structure, and there is provided a flow path for supplying the cooling water to the leading edge space; and wherein the cooling water having a hardness of at most 100 (mg/L) passes through the leading edge space and the flow path.

ADVANTAGEOUS EFFECT(S) OF INVENTION

In accordance with the present invention, it is difficult for the flow path for the cooling water to be narrowed or clogged, and it is possible to provide a top roller, which is capable of properly working for a long period of time.

BRIEF DESCRIPTION OF DRAWING(S)

Fig. 1 is a schematic flow chart showing the flow of a process for manufacturing sheet glass by a float process;
Fig. 2 is a schematic top plan view showing the top plan of an example of the float bath in a float glass manufacturing apparatus;
Fig. 3 is a schematic side view showing the relative positional relationship between a top roller and a glass ribbon;
Fig. 4 is a schematic cross-sectional view showing an example of the leading edge portion of a top roller according to the present invention;

Fig. 5 is a schematic cross-sectional view showing an example of a portion of the float bath in a float glass manufacturing apparatus where the top roller is introduced; and

Fig. 6 is a schematic flow chart showing the flow of a process for manufacturing sheet glass in accordance with the present invention.

DESCRIPTION OF EMBODIMENT(S)

Now, the features of the present invention will be described in detail.

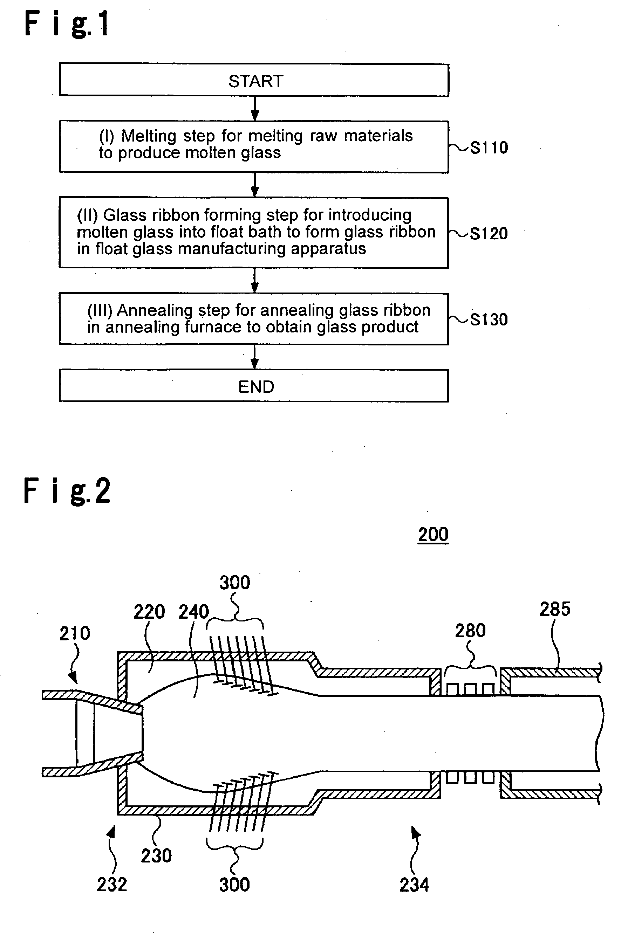

First, for better understanding of the present invention, the process for manufacturing sheet glass by a float process will be briefly described in reference to Fig. 1.

Fig. 1 is a schematic flow chart showing a process for manufacturing sheet glass by the float process. Such a process for manufacturing sheet glass by the float process includes:

(I) a melting step for melting raw materials to produce molten glass (Step S110),

(II) a glass ribbon forming step for introducing the molten glass into a float bath to form a glass ribbon in the manufacture of float glass (Step S120), and

(III) an annealing step for annealing the glass ribbon in an annealing furnace to obtain sheet glass (Step S130).

In the melting step in item (I), the raw materials, which are composed of silica sand, limestone and/or soda ash formulated and mixed in accordance with the composition of desired sheet glass, is introduced into a melting furnace to produce the molten glass. The temperature of the melting furnace may be, for example, from about 1,400°C to about 1,600°C, although the temperature varies depending on the composition of such a desired sheet glass

The heating method is not particularly limited. For example, the raw materials may be heated by flame produced by a burner disposed in the melting furnace. The burner may employ a heavy oil or a natural gas for example. Or, the raw materials may be heated by use of a normal electric melting furnace.

In the glass ribbon forming step in item (II), the molten glass produced by the step in item (I) is introduced into the float bath containing molten tin, forming the glass ribbon. The obtained glass ribbon is taken out of the outlet of the float bath. This step will be described in detail later.

In the annealing step in item (III), the glass ribbon, which is taken out of the float bath, is annealed to manufacture sheet glass.

The annealing furnace is configured such that heat produced by burning gas or an electric heater can be supplied to a desired position in the annealing furnace. The glass ribbon, which is introduced into the annealing furnace, having a relatively high temperature, is finally cooled to a temperature range close to normal temperature, and is removed from the annealing furnace.

Sheet glass is manufactured through the following steps.

Next, the step in the above-mentioned item (II) (Step S120) will be described in more detail in reference to Fig. 2.

Fig. 2 is a schematic view showing the top plan of an example of the float bath in a float glass manufacturing apparatus used in the glass ribbon forming step in item (II) (Step S120).

The float glass manufacturing apparatus 200 includes an introduction part 210, a float bath 230, a conveying unit 280 and top rollers 300.

The introduction part 210 is a part where the molten glass obtained in the above-mentioned step (I) is introduced into the float bath 230 containing molten tin (which may contain a molten tin alloy, and which is hereinbelow referred to as the molten tin) 220.

The molten glass, which has been introduced into the float bath 230, continuously moves from an upstream side 232 toward a downstream side 234 of the float bath 230, floating on the surface of the molten tin 220. Thus, a glass ribbon 240 is formed.

It should be noted that the glass ribbon 240, particularly its width (the length in a vertical direction in Fig. 2) trends to be shrunk toward a central direction since the glass ribbon trends to have an equilibrium thickness (having, e.g. about 7 mm) in an unrestrained state, being affected by the relationship between the surface tension of the molten glass and gravity while the glass ribbon is conveyed, being pulled in an advancing direction. From this point of view, the top rollers 300 are employed in order to control the shrinkage of the glass ribbon so as to keep the thickness of the glass ribbon at a desired level.

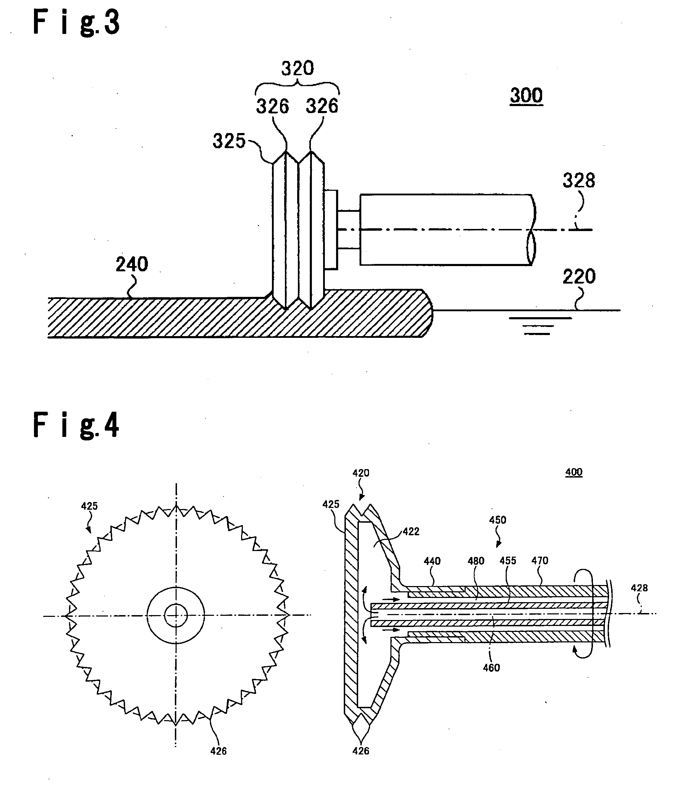

Fig. 3 shows a relative positional relationship between the glass ribbon 240 and the leading edge portion 320 of a top roller 300 when the top rollers are employed to keep the glass ribbon 240 at a certain thin thickness.

As shown in Fig. 3, each of the top rollers 300 has a disc-shaped rotary member 325 disposed on its leading edge portion 320. In a usual case, the rotary member 325 has projections 326 formed on a circumferential side thereof along a circumferential direction.

When the rotary members 325 are brought into contact with the surfaces of both lateral portions of the glass ribbon 240 extending along the advancing direction, the rotary members 325, in particular the projections 326 hold down both lateral portions of the glass ribbon while the rotary members 325 rotate. In this way, the glass ribbon 240 is prevented from shrinking in a direction orthogonal to the advancing direction because of being restrained by the rotary members 325. Thus, it is possible to keep the glass ribbon at the desired thickness by employing the top rollers 300.

The rotary members 325 are configured to be rotated about respective central axes of the respective top rollers 300.

It is likely that the temperature of the leading edge portions 320 of the top rollers 300 significantly increases in use since the leading edge portions are brought into direct contact with the glass ribbon at a high temperature. From this point of view, the leading edge portions 320 of the top rollers 300 are configured to be cooled by passing cooling water through hollow spaces formed in the leading edge portions of the top rollers 300. Thus, it is possible to suppress an increase in the temperature of the leading edge portions of the top rollers 300.

The apparatus 200 also has the conveying unit 280 disposed outside the outlet on the downstream side 234 of the float bath 230.

The conveying unit 280 is a unit including lift-out-rolls for example. By rotating the lift-out-rolls, the glass ribbon 240 is taken out of the float bath 230, followed by being conveyed into the annealing furnace 285. After that, the glass ribbon is annealed to room temperature (or a temperature close to room temperature) in the annealing furnace 285.

(The features of the top rollers according to the present invention)

Now, the top rollers according to the present invention will be described in detail in reference to Fig. 4.

Fig. 4 is a schematic view showing an example of the leading edge portion of a top roller according to the present invention.

Each top roller 400 according to the present invention includes a leading edge portion 420 and a support 450. The support 450 has a leading edge portion 420 disposed on one end thereof.

The leading edge portion 420 is constituted by a rotary member 425 formed in substantially disc-shape, and the rotary member 425 has such a hollow structure that has a leading edge space 422 formed therein. The rotary member 425 has two rows of toothed parts formed on the entire outer circumferential side of the disc-shape such that plural projections 426 are formed in two rows on the outer circumferential side. It should be noted that although the projections 426 are shown as having a triangular cross-section in this Figure, the present invention is not limited to this mode. In other words, each of the projections 426 may have any cross-sectional shape, and the cross section of each of the projections may have a rectangular shape, a semicircular shape or the like. The number of the rows of the projections 426 is not particularly limited. The numbers of the rows may be two as shown in Fig. 4 or may be any other figure (such as one or at least three).

The support 450 includes an inner tube 455 and an outer tube 470, which extend along the direction of a coaxial central axis 428. Each of the inner tube 455 and the outer tube 470 is constituted by a hollow tubular member. The inner tube 455 has an inner space 460 formed therein. The outer tube 470 has one end connected to the leading edge portion 420 through a coupling portion 440 and contains the inner tube 455 therein. Between the inner circumferential side of the outer tube 470 and the outer circumferential side of the inner tube 455 is formed an outer space 480.

In each of the top rollers 400, the support 450 has the other end including a reduction unit, such as reduction gears, connected to the outer tube 470, and a drive unit, such as an electric motor, although not shown in Fig. 4. By controlling the power from the drive unit by use of the reduction unit, such as reduction gears or a timing belt, it is possible to rotate the rotary member 425 of the leading edge portion 420 at a desired number of revolutions through the outer tube 470 of the support 450.

As described above, the leading edge portion 420 of each top roller 400 is cooled by cooling water. The cooling water passes through the inner space 460 in the inner tube 455, reaches the leading edge space 422 in the rotary member 425 and then flows through the outer space 460, for example. The cooling water may flow in the reverse direction. In each of the top rollers 400, the flow path for the cooling water is formed by a route, which is formed by way of the inner space 460 in the inner tube 455, the leading end space 422 in the rotary member 425 and the outer space 480.

Heretofore, industrial water has been used as the cooling water, which flows through the flow paths in the conventional top rollers 300.

However, when industrial water is used as the cooling water in the top rollers, impure components (hereinbelow, referred to as sedimentary impurities) contained in such industrial water tend to gradually precipitate and deposit on walls forming the flow paths with the lapse of time. This could cause a problem in that after the top rollers have been employed for a long period of time, the flow paths for the cooling water are narrowed or clogged, with the result that the leading edge portions of the top rollers are prevented from being sufficiently cooled.

If such clogging of the cooling water occurs, the temperature of the leading edge portions of the top rollers abruptly increases (to, e.g. 800°C to 1,000°C), possibly leading to a case where the rotary member of a top roll is bonded to a glass ribbon, or the leading edge of a top roller is wrapped with the glass ribbon to prevent the toothed rotary member from sufficiently rotating. In such a case, that top roller is possibly prevented from properly working, and further, trouble occurs in the conveyance of the glass ribbon.

The production of thin sheet glass (having, e.g. a thickness of 0.3 mm to 1 mm) has expanded for display devices, such as liquid crystal panels, particularly for recent years. Such sheet glass is mainly made of alkali-free glass (alkali-free alumino-borosilicate glass). Such glass has a high melting point, which is at least 100°C higher than normal soda-lime glass.

In such sheet glass, the glass ribbon is required to be thinner than before in the manufacture of glass, and the number of the top rollers disposed per manufacturing facility is required to be increased than before. In order to increase the number of the top rollers disposed in a space having the same size, the size of the disc-shaped rotary members disposed on the leading edge portions of the top rollers is required to be made smaller. For this reason, the flow paths for cooling water formed in the top rollers trend to be more narrowed for recent years.

The leading edge portions of the top rollers are subjected to a higher temperature due to an increase in the temperature of a glass ribbon. It is highly likely that the amount of such "sedimentary impurities" adhering to the flow paths for the cooling water as described above increases as the temperature of the top rollers increases.

It is highly likely that the above-mentioned problem of "clogging" is caused under such recent circumstances even if the top rollers are used only for a short period of time. When industrial water was used to manufacture the above mentioned thin glass having a high melting point by use of usual top rolls, it was confirmed that sedimentary impurities adhered to walls forming the leading edge spaces. The sedimentary impurities contain a calcium sulfide, a calcium sulfide hydrate, calcium carbonate and so on.

The top rollers 400 according to the present invention use water having a hardness of at most 100 (mg/L), not industrial water, as the cooling water flowing through the flow paths in order to prevent the above-mentioned sedimentary impurities from adhering. The hardness of the cooling water used in the present invention is preferably at most 80 (mg/L), more preferably at most 30 (mg/L), further preferably at most 10 (mg/L).

In the present invention, it should be noted that the hardness means a value, which is obtained by converting the concentrations of calcium salt and magnesium salt contained in water to the amount of calcium carbonate ($CaCO_3$). For example, water, which contains 100 mg/L of calcium carbonate ($CaCO_3$) and 100 mg/L of magnesium carbonate ($MgCO_3$), has a hardness P expressed as follows:

$$\text{hardness P (mg/L)} = \text{value obtained by converting the sum of the concentration of calcium carbonate } (CaCO_3) + \text{the concentration of magnesium carbonate } (MgCO_3) \text{ to the concentration of calcium carbonate } (CaCO_3)$$
$$= 100(mg/L) + (100(mg/L)/84.3) \times 100.08$$
$$= 218.7(mg/L)$$

In the present invention, the formation of the sedimentary impurities contained in the cooling water is significantly suppressed by the use of cooling water having a hardness of at most 100 (mg/L). Thus, it is possible to significantly control the precipitation and the deposit of the sedimentary impurities on the flow paths. Further, it is possible to control an increase in the temperatures of the leading edge portions 420 of the top rollers 400 and to control not only the problem of the rotary member 425 of a top roller 400 being bonded to a glass ribbon but also the problem of a top roller failing to properly work. When the cooling water has a hardness of at most 80 (mg/L), it is possible to further suppress the formation of such sedimentary impurities. When the cooling water has a hardness of at most 30 (mg/L), it is possible to furthermore suppress the formation of such sedimentary impurities. When the cooling water has a hardness of at most 10 (mg/L), it was observed that it was possible to obtain a significant advantage.

In order to prevent such impurities from adhering to the wall of a flow path, the cooling water has a turbidity of preferably at most 20 degrees, more preferably at most 10 degrees, further more preferably at most 5 degrees. The turbidity referred to herein is an index indicating the degree of the turbidity of water prescribed in JIS-K-0101 9.2, wherein water has a turbidity of 1 degree (or 1 mg/L) when the water has a turbidity having the same degree as a case where 1 mg of standard substance (kaolin or forumajin) is contained in 1 L of purified water.

In order to suppress the formation of such sedimentary impurities, the cooling water has an electrical conductivity of preferably at most 1,000 mS/m. The cooling water has an electrical conductivity of more preferably at most 250 mS/m, further preferably at most 150 mS/m. The electrical conductivity (also called conductivity or specific electric conductivity) of the cooling water referred to herein is an index for conductivity prescribed in JIS-K-0101 12 and an index showing the ease in electrical conduction in a solution at 25°C existing between opposed electrodes having a cross-sectional area of 1 $cm^2$ and being apart from each other at a distance of 1 cm. It is possible to estimate the amount of a dissolved electrolyte based on an electrical conductivity (conductivity) since electricity is more likely to flow as the amount of a contained electrolyte increases.

In the top rollers 400 according to the present invention, the material for the rotary members 425 is not particularly limited. In a usual case, the rotary members 425 may be constituted by metal, such as steel or a heat-resistant alloy. By employing such metal rotary members 425, it is possible to improve a cooling effect when cooling the rotary members 425.

The rotary members 425 may have a surface subjected to coating or surface modification. The coating material preferably has a heat resistant property and may be a metal nitride or the like, for example. The surface modifier preferably has a property having a low affinity and/or low absorption to a glass ribbon, molten tin, an tin oxide and so on.

Each of the rotary members 425 is formed in a substantially disc-shape having the center passing through its corresponding axis 428. Although the diameter of the disc-shape is not particularly limited, the diameter preferably ranges, e.g. from 100 to 300 mm (about 4 to 12 inches), more preferably from 120 to 250 mm (about 5 to 10 inches), further preferably from 150 to 230 mm (about 6 to 9 inches). It should be noted that even when the rotary members 425 have a relatively small diameter, the cooling water is unlikely to be clogged in the present invention since it is possible to significantly suppress the precipitation and the deposit of such sedimentary impurities on the flow paths as described above.

The material for the inner tubes 455 and the outer tubes 470 is not particularly limited. The inner tubes 455 and the outer tubes 470 may be constituted by metal, such as steel (for example, stainless steel) or a heat-resistant alloy. The outer tubes 470 may have surfaces subjected to coating or surface modification. The coating material preferably has a heat resistant property and may be a metal nitride or the like. The surface modifier preferably has a property having a low affinity and/or a low absorption to a glass ribbon, molten tin, a tin oxide and so on.

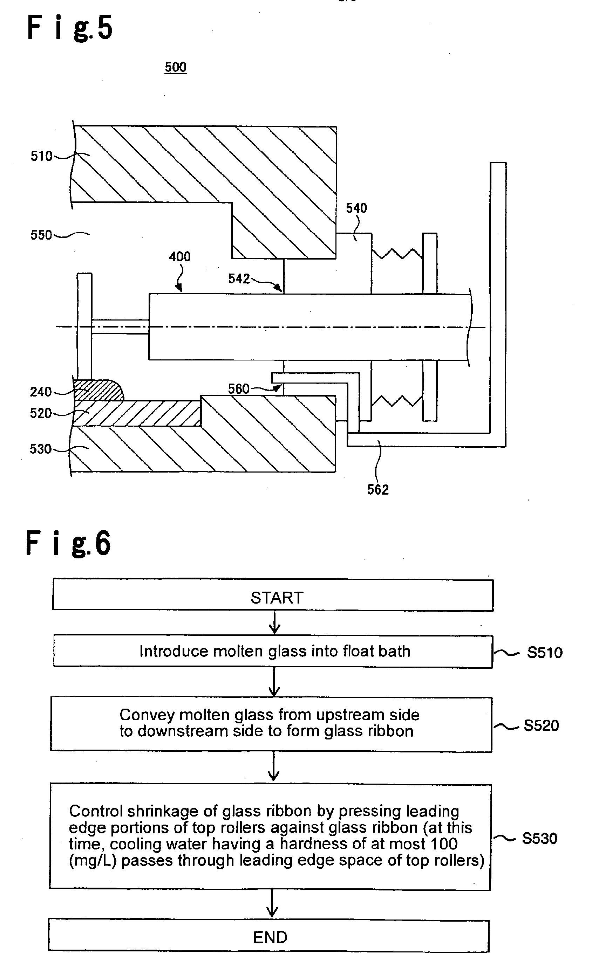

Now, a more practical structure of a portion of the float bath in a float glass manufacturing apparatus where a top roller is introduced so as to brought into contact with lateral edge portions of a glass ribbon will be described in reference to Fig. 5.

Fig. 5 is a schematic cross-sectional view showing such a portion of the float bath in the float glass manufacturing apparatus 500 where a top roller is introduced. Although no detailed explanation has been made with respect to Fig. 2, the practical float glass manufacturing apparatus 500 includes an upper ceiling structure 510 disposed above the float bath 530, and side ceiling walls 540 disposed between the upper ceiling structure 510 and the float bath 530.

The respective side ceiling walls 540 have insertion holes 542 formed for the top rollers such that the top rollers 400 are disposed through the insertion holes 542.

A reducing gas (which is usually a mixed gas of hydrogen and nitride) is usually supplied in an upper space 550 surrounded by the upper ceiling structure 510 and the side ceiling walls 540 and existing above the float bath 530 for the purpose of preventing molten tin 520 in the float bath 530 from being oxidized. However, oxygen enters through an insertion hole 542 of a side ceiling wall 540 or another gap in some cases. It is quite difficult to completely avoid the formation of a gap between a top roller 400 and an insertion hole 542 of a side ceiling wall 540 since in particular, the top rollers 400 are movable. If oxygen enters, the molten tin 520 is contaminated in some cases.

Furthermore, a downward air current is generated in the vicinity of the top rollers 400 since the top rollers 400 are cooled. As a result, oxygen, which enters through the gap between a top roller 400 and the insertion hole 542 for the top roller, entrains on such a downward air current to be directed to the surface of the molten tin 520 from an inner surface of the side ceiling wall 540.

From this point of view, in order that the oxygen entering the upper space 550 is exhausted outside the apparatus without being brought into contact with the molten tin 520, a through hole 560 for exhaustion is preferably disposed at a position, which is lower than the insertion holes 542 of the side ceiling walls 540 and higher than the surface of the molten tin 520. This through hole 560 is connected to an exhaust tube 562. Thus, the oxygen that has entered the upper space 550 is exhausted outside from the through hole 560 through the exhaust tube 562 before the oxygen entraining on such a downward air current reaches the surface of the molten tin.

This type of through hole 560 may be disposed at plural positions such that each through hole is positioned under its corresponding top roller 400 (correctly speaking, at a position lower than the insertion holes 542 and higher than the surface of the molten tin 520 as described above).

Such a through hole 560 has an inner diameter preferably ranging from 10 to 200 mm, more preferably ranging from 20 to 150 mm, further preferably ranging from 30 to 120 mm. The center-to-center distance between adjacent through holes 560 preferably ranges from 1,500 to 3,500 mm (from about 60 to about 138 inch), more preferably ranges from 1,000 to 2,500 mm (from about 40 to about 100 inch), further preferably ranges from 500 to 1,500 mm (from about 20 to about 60 inch). The cross section of such a through hole 560 is not limited to a circular shape and may be properly adopt an elliptical shape, a rectangular shape, a slit shape and so on.

(Process for manufacturing glass according to the present invention)

Now, a process for manufacturing glass according to the present invention will be described in reference to Fig. 6.

The process for manufacturing glass according to the present invention will be carried out based on the above-mentioned float process. The process according to the present invention includes:

(1) a step for introducing molten glass into a float bath (Step S510);
(2) a step for conveying the molten glass from an upstream side to a downstream side of the float bath to form a glass ribbon (Step S520); and
(3) a step for controlling the shrinkage of the glass ribbon by rotating top rollers in an advancing direction of the glass ribbon while the leading edge portions of the top rollers are pressed against areas of the glass ribbon in the advancing direction, i.e. top surfaces of both lateral sides of the glass ribbon in an upstream area of the float bath, each of the top rollers having a leading edge space formed in the leading edge portion such that cooling water having a hardness of at most 100 (mg/L) passes through the leading edge space (Step S530).

In accordance with such a process, it is possible to suppress an increase in the temperature of the leading edge portions 420 of the top rollers 400 for a long period of time, and to control not only the problem of the rotary members 425 of the top rollers 400 being bonded to a glass ribbon but also the problem of improper operation of the top rollers as described above. The present invention is effective in the manufacture of a glass plate having a thin thickness (plate thickness: from 0.3 mm to 1.0 mm) and made of alkali-free glass, and also applicable to the manufactured of sheet glass having a thin thickness of from 0.1 mm to 0.2 mm and made of alkali-free glass.

As specific examples, soda-lime glass was manufactured using cooling water specified in the following Examples 1 and 2, and alkali-free glass was manufactured, using cooling water specified in the following Example 3. In each of the examples, it was possible to continue a float forming facility for not less than one year.

Example 1: Hardness of 94 (mg/L), turbidity of 1 degree
Example 2: Hardness of 34 (mg/L), turbidity of 3 degrees
Example 3: Hardness of 4 (mg/L), turbidity of 12 degrees

On the other hand, when alkali-free glass was manufactured, using usual industrial water (hard water having a hardness of higher than 100 mg/L) as the cooling water, there was caused a problem in that the leading edge portion of a top roller was bonded to the molten glass in two months since the beginning of use.

INDUSTRIAL APPLICABILITY

The present invention is effective in the manufacture of various kinds of sheet glass by the float process, in particular in the manufacture of alkali-free glass having a thin thickness in a stable operation since the flow path for the cooling water in a top roller, which is disposed in a float bath of facility for manufacturing sheet glass by the float process, is unlikely to be narrowed or clogged, and since it is possible to properly work the top rollers for a long period of time.

The entire disclosure of Japanese Patent Application No. 2009-146531 filed on June 19, 2009 including specification, claims, drawings and summary is incorporated herein by reference in its entirety.

REFERENCE SYMBOLS

200    Float glass manufacturing apparatus
210    Introduction part
220    Molten tin
230    Float bath
232    Upstream side
234    Downstream side
240    Glass ribbon
280    Conveying unit
285    Annealing furnace
300    Top roller
320    Leading edge portion
325    Rotary member
326    Projection
328    Central axis
400    Top roller
420    Leading edge portion

| 422 | Leading edge space |
|---|---|
| 425 | Rotary member |
| 426 | Projection |
| 428 | Central axis |
| 450 | Support |
| 455 | Inner tube |
| 460 | Inner space |
| 470 | Outer tube |
| 480 | Outer space |
| 500 | Float glass manufacturing apparatus |
| 510 | Upper ceiling structure |
| 520 | Molten tin |
| 530 | Float bath |
| 540 | Side ceiling wall |
| 542 | Insertion hole |
| 550 | Upper space |
| 560 | Through hole |
| 562 | Exhaust pipe |

**Claims**

1.  A top roller comprising a rotatable leading edge portion, which is adapted to be used for controlling the shrinkage of molten glass ribbon in a float bath and to be brought into contact with the molten glass ribbon, the leading edge portion having a hollow structure including a leading edge space therein;
    wherein cooling water having a hardness of at most 100 (mg/L) passes through the leading edge space.

2.  The top roller according to Claim 1, wherein the leading edge portion has such a hollow structure, and there is provided a flow path for supplying the cooling water to the leading edge space; and
    wherein the cooling water having a hardness of at most 100 (mg/L) passes through the leading edge space and the flow path.

3.  The top roller according to Claim 1 or 2, wherein the cooling water has a hardness of at most 30 (mg/L).

4.  The top roller according to any one of Claims 1 to 3, wherein the cooling water has a hardness of at most 10 (mg/L).

5.  The top roller according to any one of Claims 1 to 4, wherein the cooling water has a turbidity of at most 20 degrees.

6.  The top roller according to any one of Claims 1 to 5, wherein the top roller comprises an inner tube and an outer tube extending in a rotation axis direction;
    the outer tube houses the inner tube, the inner tube has an inner space formed therein, and an outer space is formed between an inner circumferential side of the outer tube and an outer circumferential side of the inner tube; and
    the cooling water in the leading edge portion passes through the inner space and the outer space.

7.  The top roller according to any one of Claims 1 to 6, wherein the leading edge portion has a maximum diameter ranging from 100 mm to 300 mm.

8.  A float glass manufacturing apparatus comprising a float bath having a molten glass ribbon conveyed on an upper surface, and top rollers employed for controlling the shrinkage of the molten glass ribbon;
    wherein each of the top rollers comprises the top roller recited in any one of Claims 1 to 7.

9.  The float glass manufacturing apparatus according to Claim 8, wherein the float glass manufacturing apparatus further comprises an upper ceiling structure disposed above the float bath, and side ceiling walls disposed between the float bath and the upper ceiling structure;
    the side ceiling walls have insertion holes formed therein to receive the top rollers;
    plural through holes are formed between the insertion holes and a surface of the molten glass ribbon;
    the plural through holes have an inner diameter ranging from 10 mm to 200 mm; and
    the center-to-center distance between adjacent though holes ranges from 1,500 mm to 3,500 mm.

10. A process for manufacturing float glass comprising:

a step for introducing molten glass into a float bath;
a step for conveying the molten glass from an upstream side to a downstream side of the float bath to form a glass ribbon and
a step for controlling the shrinkage of the glass ribbon by rotating top rollers while leading edge portions of the top rollers are pressed against top surfaces of both lateral portions of the glass ribbon in an area of the glass ribbon in an advancing direction of the glass ribbon;
wherein the leading edge portion of each of the top rollers is a rotatable leading edge portion;
the leading edge portion has a hollow structure including a leading edge space therein; and
cooling water having a hardness of at most 100 (mg/L) passes through the leading edge space.

11. The process for manufacturing float glass according to Claim 10, wherein the leading edge portion of each of the top rollers has such a hollow structure, and there is provided a flow path for supplying the cooling water to the leading edge space; and
wherein the cooling water having a hardness of at most 100 (mg/L) passes through the leading edge space and the flow path.

12. The process for manufacturing float glass according to Claim 10 or 11, wherein the cooling water has a hardness of at most 30 (mg/L).

13. The process for manufacturing float glass according to any one of Claims 10 to 12, wherein an upper ceiling structure is disposed above the float bath, and side ceiling walls are disposed between the float bath and the upper ceiling structure, and the side ceiling walls have insertion holes formed therein to receive the top rollers;
plural through holes are formed between the insertion holes and a surface of the molten glass ribbon;
the plural through holes have an inner diameter ranging from 10 mm to 200 mm; and
the center-to-center distance between adjacent though holes ranges from 1,500 mm to 3,500 mm.

# F i g.1

```
┌─────────────────────────────────────────────┐
│                    START                      │
└─────────────────────────────────────────────┘
                       │
                       ▼
┌─────────────────────────────────────────────┐
│ (I) Melting step for melting raw materials    │  ~S110
│ to produce molten glass                       │
└─────────────────────────────────────────────┘
                       │
                       ▼
┌─────────────────────────────────────────────┐
│ (II) Glass ribbon forming step for introducing│
│ molten glass into float bath to form glass    │  ~S120
│ ribbon in float glass manufacturing apparatus │
└─────────────────────────────────────────────┘
                       │
                       ▼
┌─────────────────────────────────────────────┐
│ (III) Annealing step for annealing glass      │  ~S130
│ ribbon in annealing furnace to obtain glass   │
│ product                                       │
└─────────────────────────────────────────────┘
                       │
                       ▼
┌─────────────────────────────────────────────┐
│                     END                       │
└─────────────────────────────────────────────┘
```

# F i g.2

# Fig.3

320
326  326
325
328
300
240
220

# Fig.4

425
426

420
425
422
450
440  480  455  470
428
460
426

# Fig.5

500

# Fig.6

```
              START
                ↓
    Introduce molten glass into float bath          ~ S510
                ↓
    Convey molten glass from upstream side
    to downstream side to form glass ribbon         ~ S520
                ↓
    Control shrinkage of glass ribbon by pressing leading
    edge portions of top rollers against glass ribbon (at this
    time, cooling water having a hardness of at most 100         ~ S530
    (mg/L) passes through leading edge space of top rollers)
                ↓
               END
```

<table>
<tr><td colspan="2" align="center">**INTERNATIONAL SEARCH REPORT**</td><td>International application No.<br>PCT/JP2010/060311</td></tr>
</table>

A. CLASSIFICATION OF SUBJECT MATTER
*C03B18/06*(2006.01)i, *C03B18/20*(2006.01)i

According to International Patent Classification (IPC) or to both national classification and IPC

B. FIELDS SEARCHED

Minimum documentation searched (classification system followed by classification symbols)
C03B18/00-18/22

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2010 |
| Kokai Jitsuyo Shinan Koho | 1971-2010 | Toroku Jitsuyo Shinan Koho | 1994-2010 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| Y | Microfilm of the specification and drawings annexed to the request of Japanese Utility Model Application No. 100664/1988(Laid-open No. 22336/1990)<br>(Central Glass Co., Ltd.),<br>14 February 1990 (14.02.1990),<br>page 6, lines 2 to 15; fig. 1<br>(Family: none) | 1-13 |
| Y | JP 2000-126854 A (Kawasaki Steel Corp.),<br>09 May 2000 (09.05.2000),<br>claim 1; paragraphs [0006] to [0007]<br>(Family: none) | 1-13 |

☒ Further documents are listed in the continuation of Box C.     ☐ See patent family annex.

| | |
|---|---|
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| | |
|---|---|
| Date of the actual completion of the international search<br>24 August, 2010 (24.08.10) | Date of mailing of the international search report<br>07 September, 2010 (07.09.10) |
| Name and mailing address of the ISA/<br>Japanese Patent Office | Authorized officer |
| Facsimile No. | Telephone No. |

| INTERNATIONAL SEARCH REPORT | International application No. |
|---|---|
| | PCT/JP2010/060311 |

C (Continuation).    DOCUMENTS CONSIDERED TO BE RELEVANT

| Category* | Citation of document, with indication, where appropriate, of the relevant passages | Relevant to claim No. |
|---|---|---|
| Y | JP 3-288586 A  (Kurita Water Industries Ltd.), 18 December 1991 (18.12.1991), page 1, lower right column, lines 1 to 17 (Family: none) | 5 |
| Y | JP 11-302024 A  (Asahi Glass Co., Ltd.), 02 November 1999 (02.11.1999), claims; paragraphs [0001] to [0007], [0018]; drawings (Family: none) | 9,13 |

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2008189516 A
- JP 2009146531 A